# EUROPEAN PATENT APPLICATION

(11) **EP 4 613 422 A1**
(43) Date of publication of application: **10.09.2025**
(21) Application number: 23916427.0
(22) Date of filing: 14.12.2023
(51) Int. Cl.: B23Q 7/04, B23Q 15/013, B23Q 5/22, B65G 47/90

(54) **GANTRY LOADER CONTROL METHOD**

(30) Priority: 12.01.2023 KR 20230004423
(71) Applicant: DN Solutions Co., Ltd., Changwon-si, Gyeongsangnam-do 51537 (KR)
(72) Inventor: PARK, Sangyoung, Changwon-si Gyeongsangnam-do 51540 (KR)
(74) Representative: BCKIP Part mbB
(86) International application number: PCT/KR2023/020609
(87) International publication number: WO 2024/150944

(57) **Abstract**

A plurality of gantry loaders is installed on a single guide beam and basic information such as a position, a movement path, a target point, and a transport speed, etc., among the plurality of gantry loaders is shared, the plurality of gantry loaders does not collide or interfere with each other and expands a movement range of each gantry loader. **In** addition, an operation of each gantry loader is synchronized through synchronization of control information, thereby improving a processing productivity of the workpiece by efficiently operating the plurality of gantry loaders installed on the single guide beam without collision or interference between the plurality of gantry loaders.

## Description

### [Technical Field]

The present disclosure relates to a gantry loader that supplies a workpiece to a machine tool and discharges the workpiece therefrom, and more specifically, to a method of controlling a plurality of gantry loaders installed on a single guide beam.

### [Background Art]

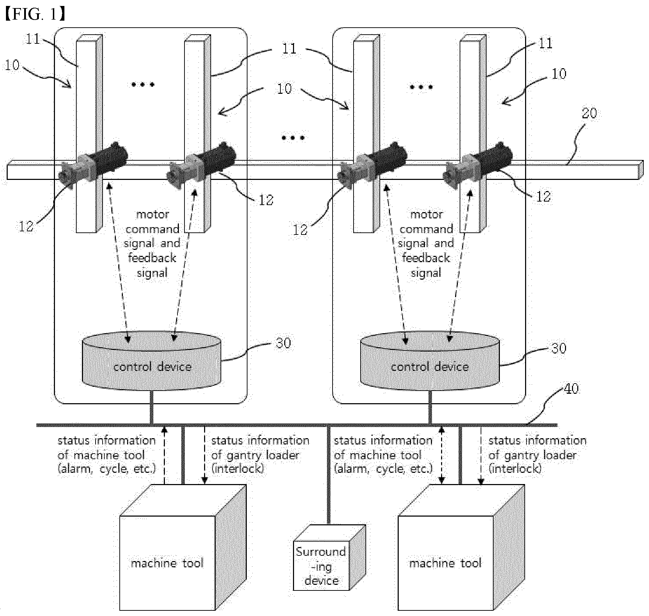

In general, a gantry loader, as shown in FIG. 1, may be installed as an additional device in a machine tool such as a turning center, and perform a function of supplying a material, e.g., a workpiece, to be processed to a spindle of the machine tool or discharging and loading a processed material from the spindle. The gantry loader 10 may include a horizontal guide beam 20 which is installed on an upper portion of the machine tool in a direction of a rotation shaft of a machine tool spindle, an arm 11 which slidably moves on the guide beam 20, and a gripper provided at a distal end of the arm 11 to hold the material when supplying and discharging the material.

The gantry loader 10 may be installed on each machine tool, or one gantry loader 10 may be installed on two or more machine tools in an extended form to supply and discharge the material when the machine tools are arranged in series.

However, if a gantry loader 10 is installed for each machine tool, there may be a problem that its installation area and cost increase. In addition, if one gantry loader 10 is installed to deal with two or more machine tools, there may arise a case that an operation of the gantry loader 10 does not match material supply and discharge cycles of the machine tool, which delays the operation of the machine tool and reduces productivity thereof.

In order to overcome such defects, two or more gantry loaders 10 may be installed and operated on a single guide beam 20. However, when two or more gantry loaders 10 are installed on the single guide beam 20 and configured to deal with a machine tool having two spindles or a plurality of machine tools for continuous machining process, an operating range of each gantry loader 10 should be limited to avoid collision or interference among the plurality of gantry loaders 10 installed on the single guide beam 20.

Therefore, even if multiple gantry loaders 10 are installed on the single guide beam 20, there is no merit other than each gantry loader 10 merely shares one guide beam 20. In addition, when the plurality of gantry loaders 10 installed on the single guide beam 20 is independently controlled and applied to a continuous machining process, unnecessary waiting time and stopping operation may be generated to meet a preset operation speed and work order to avoid collision or interference between the gantry loaders 10, which results in decreasing the productivity of the continuous machining process as well as deteriorating life spans of respective components of the machine tool.

Patent document 1 relates to a structure in which one gantry loader is installed on each of a plurality of machine tool groups each composed of two machine tools. In addition, Patent document 1 implements an automation system to reduce interventions of a worker in a continuous processing line by controlling the gantry loader to move in a direction of processing a workpiece in a series of continuous processing lines. However, this system is so configured that one gantry loader should handle at least two machine tools, which may not match workpiece discharge and supply cycles of the machine tool and delay the operation of the machine tool.

In addition, Patent Document 2 discloses a structure to install a plurality of gantry loaders on a single guide beam in which a plurality of reciprocating units is installed on a single horizontal transport beam (guide beam) and a gantry loader to be independently controlled is installed on each reciprocating unit. However, Patent Document 2 relates to a control command transmission technology by wireless communication through a TCP/IP module between a main control panel installed on the ground and a sub-control panel installed on the reciprocating structure. Patent Document 2 merely discloses a plurality of gantry loaders that is independently controlled on a single guide beam, so there is a problem that productivity of the continuous processing line decreases as well as a life span of the component is deteriorated due to unnecessary waiting time and stopping operation according to a set operation speed and sequence in order to avoid collisions or interferences between the gantry loaders.

### [Cited References]

### [Patent Documents]

(Patent Document 1) Korean Patent Registration No. 10-2308542
(Patent Document 2) Korean Patent Laid-Open Publication No. 10-2008-0099075

### [Disclosure of Invention]

### [Technical Problem]

To resolve the problems discussed above, an object of the present disclosure is to provide a method of controlling a plurality of gantry loaders installed on a single guide beam which is capable of avoiding collision or interference between respective gantry loaders and expanding a movement range of each gantry loader.

Another object of the present disclosure is to provide a method of controlling a plurality of gantry loaders installed on a single guide beam which is capable of improving operational efficiency of the plurality of gantry loaders by sharing basic information such as a position, a movement path, a transport target point, and a transport speed, etc., among the plurality of gantry loaders.

### [Technical Solution]

To achieve the objects discussed above, a method of controlling a plurality of gantry loaders that reciprocates on a single guide beam 20 installed in a horizontal direction by sharing control information among each gantry loader through a communication line 40 according to an exemplary embodiment of the present disclosure may include:
an information acquisition step (S10) for acquiring control information of each gantry loader 10 from respective control devices 30 equipped in the plurality of gantry loaders 10;
a movement path and priority calculation step (S20) for calculating a predetermined work priority according to a movement path and a performed work (Dn) of each gantry loader 10 based on the control information acquired in the information acquisition step (S10);
a transport command and transport determination step (S30) including a transport determination step (S31) to determine whether the gantry loader 10 is currently transporting by confirming the command information, and a transport command determination step (S32) to determine whether the transport command has been updated for each gantry loader 10 when it is determined that the gantry loader 10 is not transporting in the transport determination step (S31), wherein when the transport command is input to each gantry loader 10 in the transport command determination step (S32), the movement path and priority calculation step (S20) is executed again;
a movement path interference determination step (S40) including a current position interference determination step (S41) to determine whether the movement path calculated in the movement path and priority calculation step (S20) interferes with a current position (An) of the adjacent gantry loader (10) when the transfer command has not been updated for each gantry loader 10 in the transport command and transport determination step (S30), and a movement path interference determination step (S42) to determine whether the movement path calculated in the movement path and priority calculation step (S20) interferes with the movement path of the adjacent gantry loader 10 when it is determined that the movement path of the gantry loader 10 does not interfere with the current position (An) of the adjacent gantry loader 10 in the current position interference determination step (S41) or when it is determined that the gantry loader 10 is being transported in the transfer determination step (S31);
a priority determination step (S50) in which when the movement path of the gantry loader 10 interferes with the current position (An) or the movement path of the adjacent gantry loader 10 in the current position interference determination step (S41), a work priority value of the current gantry loader 10 is compared with a work priority value of the adjacent gantry loader 10, and then a standby command is executed so that a current gantry loader 10 may not depart and wait at the current position when the work priority value is lower than the work priority value of the adjacent gantry loader 10;
a transport command step (S60) in which when the movement path of the gantry loader 10 does not interfere with the current position (An) or the movement path of the adjacent gantry loader 10 in the current position interference determination step (S41), or when the work priority value determined in the priority determination step (S50) is greater than the work priority value of the adjacent gantry loader 10, the transport command is given to move the gantry loader to a transport target position (Bn) acquired in the information acquisition step (S10);
a safety distance maintenance step (S70) in which when the gantry loader 10 is determined to be transporting in the transport determination step (S31) or the transport command is given in the transport command step (S60), a distance calculation step (S71) is executed to calculate a distance to the adjacent gantry loader 10 by calculating a difference value between the current position (An) of the gantry loader 10 being transported and the current position (An) of the adjacent gantry loader 10, a safety distance determination step (S72) is executed to determine whether the distance to the adjacent gantry loader 10 satisfies a predetermined safety distance range as a result of the distance calculation step (S71), a normal speed maintenance step (S73) is executed to command a transport speed of the gantry loader 10 to be accelerated to a predetermined maximum speed when the distance from the adjacent gantry loader 10 satisfies the predetermined safety distance range as a result of the safety distance determination step (S72) , and a deceleration step (S74) is executed to command a transport speed of the gantry loader 10 to be decelerated according to a pre-determined deceleration ratio when the distance from the adjacent gantry loader 10 does not satisfy a pre-determined safety distance range; and
a target point arrival determination step (S80) in which each gantry loader 10 is determined whether each has reached a transport target point as it moves after the safety distance maintenance step (S70), and a process returns to the information acquisition step (S10) when each gantry loader 10 has reached the transport target point, but the safety distance maintenance step (S70) is repeated when each gantry loader 10 has not reached the transport target point.

As a preferred embodiment, the control information acquired in the information acquisition step (S10) may include a current position (An) of the gantry loader 10 on the guide beam 20, a transport target position (Bn), a transport speed (Cn) including a real-time transport speed change value, a maximum speed parameter (En) including a speed time constant, a performance task information (Dn) of the gantry loader 10, and synchronous control command information (Fn).

As a preferred embodiment, the transport determination step (S31) may make a decision by checking the transport speed (Cn) of the gantry loader 10 among the control information.

As a preferred embodiment, in the movement path and priority calculation step (S20), the movement path of each gantry loader 10 may be determined by calculating coordinate values of a section that linearly connects coordinate values of the current position (An) and the transport target position (Bn), while including a movement direction of the gantry loader 10.

As a preferred embodiment, in the movement path and priority calculation step (S20), the work priority of each gantry loader 10 may be set in advance for each type of the performance task information (Dn), and the work priority of the performance task information (Dn) of each gantry loader 10 may be calculated by comparing the performance task information (Dn) of each gantry loader 10 with a preset work priority value.

As a preferred embodiment, the current position interference determination step (S41) may determine that interference occurs when the current position (An) of an adjacent gantry loader 10 falls within a range of the coordinate values between a starting point and an arrival point of the movement path of the current gantry loader 10 which are calculated in the movement path and priority calculation step (S20).

As a preferred embodiment, the movement path interference determination step (S42) may determine whether there is an overlapping portion between the range of coordinate values between the start point and the arrival point of the movement path of the current gantry loader 10 and the range of coordinate values between the start point and the arrival point of the movement path of an adjacent gantry loader 10 which are calculated in the movement path and priority calculation step (S20).

As a preferred embodiment, in the priority determination step (S50), the transport standby command may be configured to return process to the movement path interference determination step (S40) in real time and re-execute the movement path interference determination step (S40) according to control information changed by the transport of the adjacent gantry loader 10.

As a preferred embodiment, in the transport command step (S60), the transport speed command value of the gantry loader 10 moving to the transport target position (Bn) may be a maximum speed parameter (En) value including the speed time constant.

As a preferred embodiment, the safety distance determined in advance in the safety distance determination step (S72) may be a sum of the non-contact distance (α) between mechanical parts that can exclude contact between mechanical parts of the adjacent gantry loader 10 and a braking distance (β) when the current gantry loader 10 stops at the maximum speed.

As a preferred embodiment, a maximum speed determined in advance in the normal speed maintenance step (S73) may be a maximum speed parameter (En) value including the speed time constant acquired in the information acquisition step (S10).

As a preferred embodiment, the deceleration ratio determined in advance in the deceleration step (S74) may be differentially set according to a difference between the distance from the current gantry loader 10 to the adjacent gantry loader 10 and the safety distance determined in the safety distance determination step (S72).

As a preferred embodiment, the deceleration ratio may be set in such a way that a distance obtained by subtracting the predetermined mechanical non-contact distance (α) from the current position (An) between the current gantry loader 10 and the adjacent gantry loader 10 is compared with a predetermined braking distance (β), and a deceleration degree increases as the distance obtained by subtracting the predetermined mechanical non-contact distance (α) from the current position (An) becomes smaller than the braking distance (β).

As a preferred embodiment, in the target point arrival determination step (S80), whether each of the gantry loaders 10 reaches the transport target point may be determined by determining whether the current position (An) of each of the gantry loaders 10 matches the transport target position (Bn).

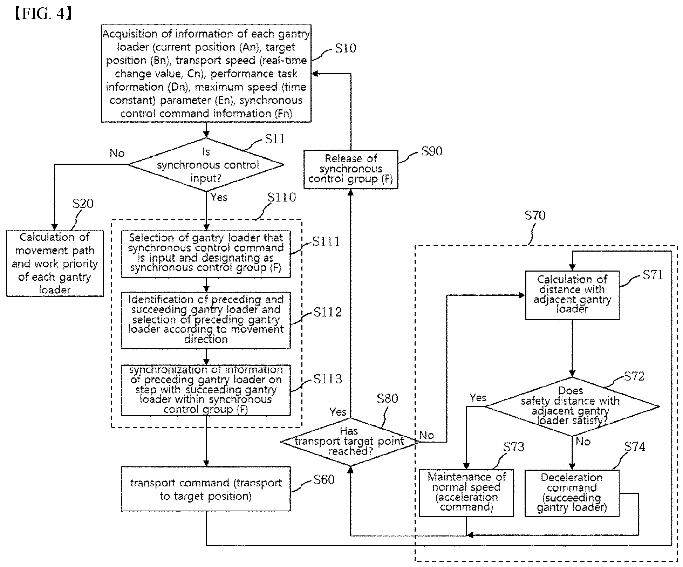

As a preferred embodiment, a synchronous control determination step (S11) may be included after the information acquisition step (S10) in which it is determined whether synchronous control command information (Fn) has been input in the information acquisition step (S10), and when it is determined that synchronous control command information (Fn) has not been input, the movement path and priority calculation step (S20) may be executed, but when it is determined that synchronous control command information (Fn) has been input, a synchronous control step (S110) is executed. (See FIG. 4).

The synchronous control step (S110) may sequentially include: a synchronous control group designation step (S111) in which when it is determined that the synchronous control command information (Fn) has been input in the synchronous control determination step (S11), it is determined whether the synchronous control command information (Fn) has been sequentially input for adjacent gantry loaders 10 and designates the gantry loaders 10 into which the synchronous control command information (Fn) has been sequentially input as a synchronous control group (F); a preceding and succeeding gantry loader selection step (S112) wherein a preceding and succeeding gantry loader is identified and selected according to a movement direction of the gantry loader 10 within the synchronous control group (F) being designated in synchronous control group designation step (S111); and a synchronization step (S113) wherein the transport speed information of the preceding gantry loader 10 selected in the synchronous control group selection step (S112) is shared with the succeeding gantry loader 10 in the synchronous control group (F) and the transport command step (S60) is executed.

As a preferred embodiment, a synchronous control release step (S90) may be further provided wherein when it is determined that the gantry loader 10 has reached the transport target point in the target point arrival determination step (S80), the synchronous control group (F) is released.

As a preferred embodiment, the synchronous control group designation step (S111) may determine whether the synchronous control command information (Fn) has been input to left and right gantry loaders 10 based on the current gantry loader 10, and when the synchronous control command information (Fn) has been input to the left and right gantry loaders 10, it may be determined whether the synchronous control command information (Fn) has also been sequentially input to the left gantry loader 10 or the right gantry loaders 10 and designates the gantry loaders 10 to which the synchronous control command information (Fn) has been sequentially input as the synchronous control group (F).

As a preferred embodiment, the preceding and succeeding gantry loader selection step (S112) may identify the movement direction of the gantry loader 10 by comparing the current position (An) and the transfer target position (Bn) value of each gantry loader 10 selected as the synchronous control group (F), and designate the preceding gantry loader 10 and succeeding gantry loader 10 in the order in which the current position (An) is located at a forefront of the movement direction of the gantry loader 10 for the gantry loaders 10 having the same movement direction.

As a preferred embodiment, in the synchronization step (S113), the transport speed information shared by the preceding gantry loader 10 with the succeeding gantry loader 10 may be the maximum speed parameter (En) including the speed time constant of the preceding gantry loader 10 acquired in the information acquisition step (S10).

A method of controlling a plurality of gantry loaders that reciprocates on a single guide beam 20 installed in a horizontal direction by sharing control information among each gantry loader through a communication line 40 according to another exemplary embodiment of the present disclosure may include: an information acquisition step (S10) for acquiring control information of each gantry loader 10 from respective control devices 30 equipped in the plurality of gantry loaders 10; a synchronous control determination step (S11) for determining whether the synchronous control command information (Fn) has been input in the synchronous control determination step (S11); a synchronous control step (S110) sequentially comprising a synchronous control group designation step (S111)in which when it is determined that the synchronous control command information (Fn) has been input in the synchronous control determination step (S11), it is determined whether the synchronous control command information (Fn) has been sequentially input for adjacent gantry loaders 10 and designates the gantry loaders 10 into which the synchronous control command information (Fn) has been sequentially input as a synchronous control group (F); a preceding and succeeding gantry loader selection step (S112) wherein a preceding and succeeding gantry loader is identified and selected according to a movement direction of the gantry loader 10 in the synchronous control group (F) being designated in synchronous control group designation step (S111); and a synchronization step (S113) wherein the transport speed information of the preceding gantry loader 10 selected in the synchronous control group selection step (S112) is shared with the succeeding gantry loader 10 in the synchronous control group (F) and the transport command step (S60) is executed; a transport command step (S60), after the synchronous control step (S110), for commanding a transport command to move the gantry loader 10 to a transport target position (Bn) acquired in the information acquisition step (S10); a safety distance maintenance step (S70) in which when the gantry loader 10 is determined to be transporting in the transport determination step (S31) or the transport command is given in the transport command step (S60), a distance calculation step (S71) is executed to calculate a distance to the adjacent gantry loader 10 by calculating a difference value between the current position (An) of the gantry loader 10 being transported and the current position (An) of the adjacent gantry loader 10, a safety distance determination step (S72) is executed to determine whether the distance to the adjacent gantry loader 10 satisfies a predetermined safety distance range as a result of the distance calculation step (S71), a normal speed maintenance step (S73) is executed to command a transport speed of the gantry loader 10 to be accelerated to a predetermined maximum speed when the distance from the adjacent gantry loader 10 satisfies the predetermined safety distance range as a result of the safety distance determination step (S72) , and a deceleration step (S74) is executed to command a transport speed of the gantry loader 10 to be decelerated according to a pre-determined deceleration ratio when the distance from the adjacent gantry loader 10 does not satisfy a pre-determined safety distance range; a target point arrival determination step (S80) in which each gantry loader 10 is determined whether each has reached a transport target point as it moves after the safety distance maintenance step (S70), a process returns to the information acquisition step (S10) when each gantry loader 10 has reached the transport target point, but the safety distance maintenance step (S70) is repeated when each gantry loader 10 has not reached the transport target point; and a synchronous control release step (S90) may be further provided wherein when it is determined that the gantry loader 10 has reached the transport target point in the target point arrival determination step (S80), the synchronous control group (F) is released.

As a preferred embodiment, the synchronous control group designation step (S111) may determine whether the synchronous control command information (Fn) has been input to left and right gantry loaders 10 based on the current gantry loader 10, when the synchronous control command information (Fn) has been input to the left and right gantry loaders 10, determine whether the synchronous control command information (Fn) has also been sequentially input to the left gantry loader 10 or the right gantry loaders 10, and designate the gantry loaders 10 to which the synchronous control command information (Fn) has been sequentially input as the synchronous control group (F).

As a preferred embodiment, the preceding and succeeding gantry loader selection step (S112) may identify the movement direction of the gantry loader 10 by comparing the current position (An) and the transfer target position (Bn) value of each gantry loader 10 selected as the synchronous control group (F), and designate the preceding gantry loader 10 and succeeding gantry loader 10 in the order in which the current position (An) is located at a forefront of the movement direction of the gantry loader 10 for the gantry loaders 10 having the same movement direction.

As a preferred embodiment, in the synchronization step (S113), the transport speed information shared by the preceding gantry loader 10 with the succeeding gantry loader 10 may be the maximum speed parameter (En) including the speed time constant of the preceding gantry loader 10 acquired in the information acquisition step (S10).

As a preferred embodiment, the control information acquired in the information acquisition step (S10) may include a current position (An) of the gantry loader 10 on the guide beam 20, a transport target position (Bn), a transport speed (Cn) including a real-time transport speed change value, a maximum speed parameter (En) including a speed time constant, a performance task information (Dn) of the gantry loader 10, and synchronous control command information (Fn).

As a preferred embodiment, in the transport command step (S60), the transport speed command value of the gantry loader 10 moving to the transport target position (Bn) may be a maximum speed parameter (En) value including the speed time constant.

As a preferred embodiment, the safety distance determined in advance in the safety distance determination step (S72) may be a sum of the non-contact distance (α) between mechanical parts that can exclude contact between mechanical parts of the adjacent gantry loader 10 and a braking distance (β) when the current gantry loader 10 stops at the maximum speed.

As a preferred embodiment, a maximum speed determined in advance in the normal speed maintenance step (S73) may be a maximum speed parameter (En) value including the speed time constant acquired in the information acquisition step (S10).

As a preferred embodiment, the deceleration ratio determined in advance in the deceleration step (S74) may be differentially set according to a difference between the distance between the current gantry loader 10 and the adjacent gantry loader 10 and the safety distance determined in the safety distance determination step (S72).

As a preferred embodiment, the deceleration ratio may be set in such a way that a distance obtained by subtracting the predetermined mechanical non-contact distance (α) from the current position (An) between the current gantry loader 10 and the adjacent gantry loader 10 is compared with a predetermined braking distance (β), and a deceleration degree increases as the distance obtained by subtracting the predetermined mechanical non-contact distance (α) from the current position (An) becomes smaller than the braking distance (β).

As a preferred embodiment, in the target point arrival determination step (S80), whether each of the gantry loaders 10 has reached the transport target point may be determined by identifying whether the current position (An) of each of the gantry loaders 10 matches the transport target position (Bn).

### [Advantageous Effects]

The present disclosure may expand a range of movement of a gantry loader on a guide beam without causing collision or interference between gantry loaders installed in plural on a single guide beam.

In addition, the present invention may increase an operational efficiency of the gantry loader by sharing basic information such as a position, a movement path, a transport target point, and a transport speeds between gantry loaders installed in plural on the guide beam.

Further, the present invention may improve a processing productivity of the material (workpiece) by efficiently operating a plurality of gantry loaders installed on the single guide beam without collision or interference between the plurality of gantry loaders.

### [Description of Drawings]

FIG. 1 is a conceptual diagram illustrating a structural inter-relationship between a plurality of gantry loaders installed on a single guide beam and a machine tool according to an exemplary embodiment of the present disclosure.
FIG. 2 is a conceptual diagram illustrating a control function of two gantry loaders installed on a single guide beam according to an exemplary embodiment of the present disclosure.
FIG. 3 is a flow chart illustrating a collision prevention control when a plurality of gantry loaders moves on a single guide beam according to an exemplary embodiment of the present disclosure.
FIG. 4 is a flow chart illustrating a synchronization control when a plurality of gantry loaders moves on a single guide beam according to an exemplary embodiment of the present disclosure.

### [Best mode for embodiment of Invention]

The following description is merely exemplary in nature and is not intended to limit the present disclosure, application, or uses. It should be understood that throughout the drawings, corresponding reference numerals indicate like or corresponding units and features.

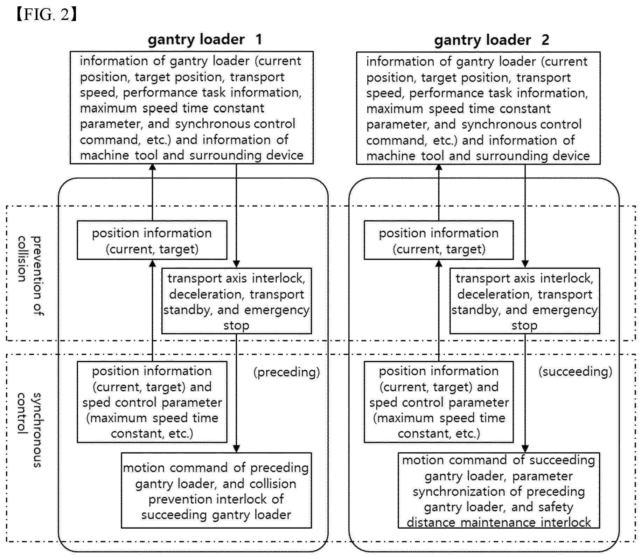

Hereinafter, exemplary embodiments of the present disclosure will be described in detail with reference to FIG. 2 to FIG. 4.

FIG. 1 is a conceptual diagram illustrating a structural inter-relationship between a plurality of gantry loaders 10 installed on a single guide beam 20 and a machine tool according to an exemplary embodiment of the present disclosure.

Referring to FIG. 1, a gantry loader 10 of exemplary embodiment of the present disclosure may be provided with a single guide beam 20 installed in a horizontal direction. On the guide beam 20, an arm 11 may be disposed vertically, and a plurality of gantry loaders 10 including a servo motor 12 that moves the arm 11 reciprocally in the horizontal direction on the guide beam 20 may be installed. In addition, the plurality of gantry loaders 10 may include a control device 30 that communicates a motor command signal and a feedback signal to control the servo motor 12.

Meanwhile, the control device 30 may be configured in such a way that the plurality of gantry loaders 10 is controlled by one control device 30.

In addition, each control device 30 of the plurality of gantry loaders 10 may be linked to share control information with each other through a communication line 40, and may also be linked with machine tools and surrounding devices to share the control information.

FIG. 2 is a conceptual diagram illustrating a control function of two gantry loaders 10 installed on a single guide beam 20 according to an exemplary embodiment of the present disclosure

Referring FIG. 2, the control device 30 of the gantry loader 10 according to an exemplary embodiment of the present disclosure may share control information such as a current position, a transport target point, a transport speed, performance task information, a maximum speed time constant parameter, and a synchronous control command of each gantry loader 10 as well as control information of the machine tools and the surrounding devices, which control each gantry loader 10 to allow a collision prevention in advance and synchronous control between each gantry loader 10 moving on the single guide beam 20.

More specifically, a collision prevention function may be configured to perform functions of transport axis interlock, deceleration, transport standby, and emergency stop to avoid collision with an adjacent gantry loader 10 during a process of controlling the servo motor 12 to move the gantry loader 10 from a current position to a target point.

In addition, a synchronous control function may be configured to provide control information of a preceding gantry loader 10 such as the current position, the transport target, the maximum speed and speed control parameters including the time constant, etc., to a succeeding gantry loader 10, thereby controlling the succeeding gantry loader 10 to follow a motion command of the preceding gantry loader 10. At this time, the preceding gantry loader 10 may operate an interlock function to prevent collision with the succeeding gantry loader 10 by a motion command, and the succeeding gantry loader 10 may be controlled to operate the interlock function to maintain a safe distance with the preceding gantry loader 10 during a synchronous operation according to the motion command.

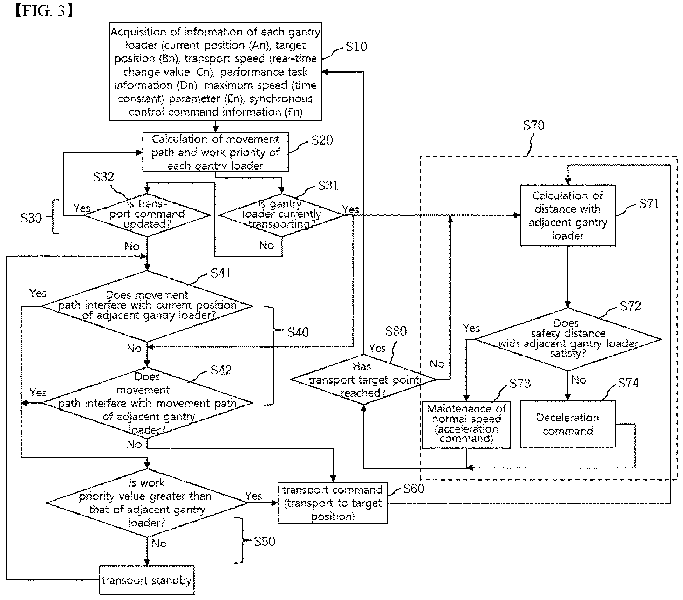

FIG. 3 is a flow chart illustrating a collision prevention control when a plurality of gantry loaders 10 moves on a single guide beam 20 according to an exemplary embodiment of the present disclosure.

Referring to FIG. 3, a control operation of the plurality of gantry loaders 10 installed on the single guide beam 20 may be performed by respective control devices 30, and each control device 30 may control each gantry loader 10 in accordance with following steps to avoid collision between respective gantry loaders 10.

Firstly, an information acquisition step (S10) may be executed.

The information acquisition step (S10) may acquire control information including a current position (An) of the gantry loader 10 on the guide beam 20, a transport target position (Bn), a transport speed (Cn) including a real-time transport speed change value, a maximum speed parameter (En) including a speed time constant, a performance task information (Dn) of the gantry loader 10, and synchronous control command information (Fn). The acquired control information is shared with the control device 30 of the respective gantry loaders 10 through a communication line 40.

Next, a movement path and priority calculation step (S20) may be executed.

The movement path and priority calculation step (S20) may calculate a predetermined work priority according to a movement path and a performance task information (Dn) of each gantry loader 10 based on the control information acquired in the information acquisition step (S10).

More specifically, the movement path of each gantry loader 10 may be determined by calculating coordinate values of the current position (An) and the transport target position (Bn), and by calculating coordinate values of a section that linearly connects a starting point and an arrival point of the movement path of the gantry loader 10 on the guide beam 20 including a movement direction and a movement distance of the gantry loader 10.

Meanwhile, a work priority of each gantry loader 10 may be set in advance for each type of the performance task information (Dn), and a work priority value of the performance task information (Dn) of each gantry loader 10 may be calculated by comparing the performance task information (Dn) of each gantry loader 10 with a preset work priority value.

Next, a transport command and transport determination (S30) may be executed.

This step (S30) may be composed of a transport determination step (S31) to determine whether the gantry loader 10 is currently transporting by confirming the command information, and a transport command determination step (S32) to determine whether the transport command has been updated for each gantry loader 10 when the gantry loader 10 is not currently transporting as a result of the transport determination step (S31).

When the transport command has been updated for each gantry loader 10 in the transport command determination step (S32), the movement path and priority calculation step (S20) may be executed again to calculate a changed movement path each gantry loader 10 in real time that is changed as each gantry loader 10 moves.

Next, a movement path interference determination step (S40) may be executed.

This step (S40) may be composed of a current position interference determination step (S41) to determine whether the movement path calculated in the movement path and priority calculation step (S20) interferes with a current position (An) of the adjacent gantry loader 10 when the transfer command has not been updated for each gantry loader 10 in the transport command and transport determination step (S30), and a movement path interference determination step (S42) to determine whether the movement path calculated in the movement path and priority calculation step (S20) interferes with the movement path of the adjacent gantry loader 10 when it is determined that the movement path of the gantry loader 10 does not interfere with the current position (An) of the adjacent gantry loader 10 in the current position interference determination step (S41) or when it is determined that the gantry loader 10 is being transported in the transfer determination step (S31).

More specifically, the current position interference determination step (S41) may determine that interference occurs when the current position (An) of an adjacent gantry loader 10 falls within a range of the coordinate values between a starting point and an arrival point of the movement path of the current gantry loader 10 which are calculated in the movement path and priority calculation step (S20).

In addition, the movement path interference determination step (S42) may determine whether there is an overlapping portion between the range of coordinate values between the start point and the arrival point of the movement path of the current gantry loader 10 and the range of coordinate values between the start point and the arrival point of the movement path of an adjacent gantry loader 10 which are calculated in the movement path and priority calculation step (S20).

Next, a priority determination step (S50) may be executed.

In this step (S50), when the movement path of the gantry loader 10 interferes with the current position (An) or with the movement path of the adjacent gantry loader 10 as a result of the movement path interference determination step (S40), a work priority value of the performance task information (Dn) of the gantry loader 10 calculated in the movement path and priority calculation step (S20) may be compared with a work priority value of the performance task information (Dn) of adjacent gantry loader 10 and may be determined whether the former is greater than the latter. Further, as a result of determination, when the work priority value of the gantry loader 10 is smaller than the work priority value of the adjacent gantry loader 10, a standby command may be executed so that a current gantry loader 10 may not depart and wait at the current position.

Meanwhile, the transport standby command may be configured to return to the movement path interference determination step (S40) in real time and re-execute the movement path interference determination step (S40) according to control information changed by the transport of the adjacent gantry loader.

Next, a transport command step (S60) is executed.

In this step (S60), when the movement path of the gantry loader 10 does not interfere with the current position (An) or with the movement path of the adjacent gantry loader 10 in the movement path interference determination step (S40), or when the work priority value determined in the priority determination step (S50) is greater than the work priority value of the adjacent gantry loader 10, the transport command may be given to move the gantry loader to a movement target position (Bn) acquired in the information acquisition step (S10).

Here, the transport speed of the gantry loader 10 moving to the transport target position (Bn) may be commanded as a maximum speed parameter (En) value including the speed time constant.

Next, a safety distance maintenance step (S70) may be executed.

In this step (S70), when the gantry loader 10 is determined to be transporting in the transport determination step (S31) or the transport command of the gantry loader 10 is given in the transport command step (S60), a distance calculation step (S71) may be executed to calculate a distance to the adjacent gantry loader 10 by calculating a difference value between the current position (An) of the gantry loader 10 being transported and the current position (An) of the adjacent gantry loader 10.

In addition, a safety distance determination step (S72) may be executed to determine whether the distance to the adjacent gantry loader 10 satisfies a predetermined safety distance range as a result of the distance calculation step (S71).

A normal speed maintenance step (S73) may be then executed to command a transport speed of the gantry loader 10 to be accelerated to a predetermined maximum speed when the distance from the adjacent gantry loader 10 satisfies a predetermined safety distance range as a result of the safety distance determination step (S72).

A deceleration step (S74) may be further executed to command a transport speed of the gantry loader 10 to be decelerated according to a predetermined deceleration ratio when the distance from the adjacent gantry loader 10 does not satisfy a predetermined safety distance range.

Preferably, the safety distance determined in advance in the safety distance determination step (S72) may be a sum of the non-contact distance (α) between mechanical parts that can exclude contact between mechanical parts of the adjacent gantry loader 10 and a braking distance (β) when the current gantry loader 10 stops at the maximum speed.

In addition, the maximum speed determined in advance in the normal speed maintenance step (S73) may be a maximum speed parameter (En) value including the speed time constant acquired in the information acquisition step (S10).

Further, the deceleration ratio determined in advance in the deceleration step (S74) may be differentially set according to a difference between the distance between the current gantry loader 10 and the adjacent gantry loader 10 and the safety distance. The deceleration ratio may be differentially set to 75%, 50%, 25%, and 10% of the predetermined maximum speed.

The deceleration ratio may be set to 75% of the predetermined maximum speed when a distance obtained by subtracting the predetermined mechanical non-contact distance (α) from the current position (An) between the current gantry loader 10 and the adjacent gantry loader 10 is greater than 75% of the braking distance (β) and smaller than 100% of the braking distance (β), or when the maximum speed parameter (En) including the speed time constant of the gantry loader 10 reaches 75%. In other words, the gantry loader 10 is transported at a speed of 75% of the maximum speed parameter (En) including the speed constant.

The deceleration ratio may be set to 50% when a distance obtained by subtracting the predetermined mechanical non-contact distance (α) from the current position (An) between the current gantry loader 10 and the adjacent gantry loader 10 is greater than 50% of the braking distance (β) and smaller than 75% of the braking distance (β), or when the maximum speed parameter (En) including the speed time constant of the gantry loader 10 reaches 50%. In other words, the gantry loader 10 is transported at a speed of 50% of the maximum speed parameter (En) including the speed constant.

The deceleration ratio may be set to 25% when a distance obtained by subtracting the predetermined mechanical non-contact distance (α) from the current position (An) between the current gantry loader 10 and the adjacent gantry loader 10 is greater than 25% of the braking distance (β) and smaller than 50% of the braking distance (β), or when the maximum speed parameter (En) including the speed time constant of the gantry loader 10 reaches 25%. In other words, the gantry loader 10 is transported at a speed of 25% of the maximum speed parameter (En) including the speed constant.

The deceleration ratio may be set to 10% when a distance obtained by subtracting the predetermined mechanical non-contact distance (α) from the current position (An) between the current gantry loader 10 and the adjacent gantry loader 10 is greater than 10% of the braking distance (β) and smaller than 25% of the braking distance (β), or when the maximum speed parameter (En) including the speed time constant of the gantry loader 10 reaches 10%. In other words, the gantry loader 10 is transported at a speed of 10% of the maximum speed parameter (En) including the speed constant.

The deceleration ratio may be set to 0% when a distance obtained by subtracting the predetermined mechanical non-contact distance (α) from the current position (An) between the current gantry loader 10 and the adjacent gantry loader 10 is smaller than 10% of the braking distance (β), or when the maximum speed parameter (En) including the speed time constant of the gantry loader 10 reaches a stop state. In other words, the gantry loader 10 is transported at a speed of 10% of the maximum speed parameter (En) including the speed constant, the deceleration ratio is set to 75%. The transport is performed at a speed of 0% of the maximum speed parameter (En) including the speed time constant. In other words, the transport speed of the gantry loader 10 is set to a stop state.

Next, a target point arrival determination step (S80) may be executed.

This step is configured to determine whether each gantry loader 10 has reached a transport target point as it moves after the safe distance maintenance step (S70), and more specifically, it may determine whether the current position (An) of each gantry loader (10) matches the transport target position (Bn).

In this step (S80), when each gantry loader 10 has reached the transport target point and its current position (An) matches the transport target position (Bn), a process may return to the information acquisition step (S10) for executing a next command, but when each gantry loader 10 has not reached the transport target point and its current position (An) does not match the transport target position (Bn), the safety distance maintenance step (S70) may be repeated.

As described in the exemplary embodiments, the plurality of gantry loaders 10 installed on the single guide beam 20 may expand its movement range on the guide beam 20 without causing collision or interference with each other, thereby improving a processing productivity of the material (workpiece) being handled in the machine tool.

Meanwhile, in another exemplary embodiment of the present disclosure, a control of the plurality of gantry loaders 10 installed on the single guide beam 20 may be performed by the control device 30, which controls each of the gantry loaders 10 in the following steps for a synchronous control among the gantry loaders 10.

FIG. 4 is a flow chart illustrating a synchronization control when a plurality of gantry loaders 10 moves on a single guide beam according to another exemplary embodiment of the present disclosure. Referring to FIG. 4, the present embodiment may include a synchronous control determination step (S11) and a synchronous control step (S110) between the information acquisition step (S10) and the transport command step (S60) of the embodiment referring to FIG. 3.

The synchronous control determination step (S11) may determine whether the synchronous control command information (Fn) has been input in the information acquisition step (S10). When the synchronous control command information (Fn) has not been input, the movement path and priority calculation step (S20) may be executed, but when synchronous control command information (Fn) has been input, a synchronous control step (S110) may be executed.

The synchronous control step (S110) may sequentially include a synchronous control group designation step (S111), a preceding and succeeding gantry loader selection step (S112), and a synchronization step (S113).

The synchronous control group designation step (S111) may determine whether the synchronous control command information (Fn) has been sequentially input for adjacent gantry loaders 10 when the synchronous control command information (Fn) has been input in the synchronous control determination step (S11), and designate the gantry loaders 10 into which the synchronous control command information (Fn) has been sequentially input as a synchronous control group (F).

More specifically, the synchronous control group designation step (S111) may determine whether the synchronous control command information (Fn) has been input to left and right gantry loaders 10 based on the current gantry loader 10, when the synchronous control command information (Fn) has been input to the left and right gantry loaders 10, determine whether the synchronous control command information (Fn) has also been sequentially input to the left gantry loader 10 or the right gantry loaders 10 when the synchronous control command information (Fn) has been input to left and right gantry loaders 10, and designate the gantry loaders 10 to which the synchronous control command information (Fn) has been sequentially input as the synchronous control group (F).

Next, the preceding and succeeding gantry loader selection step (S112) may identify and select a preceding and succeeding gantry loader 10 according to a movement direction of the gantry loader 10 in the synchronous control group (F) being designated in synchronous control group designation step (S111).

More specifically, the preceding and succeeding gantry loader selection step (S112) may identify a movement direction of the gantry loader 10 by comparing the current position (An) and the transfer target position (Bn) value of each gantry loader 10 selected as the synchronous control group (F), and designate a preceding gantry loader 10 and a succeeding gantry loader 10 in the order in which the current position (An) is located at a forefront of the movement direction of the gantry loader 10 for the gantry loaders 10 having the same movement direction.

Next, in the synchronization step (S113), the transport speed information of the preceding gantry loader 10 selected in the preceding and succeeding gantry loader selection step (S112) may be shared with the succeeding gantry loader 10 within the synchronous control group (F). Accordingly, the gantry loaders (10) within the synchronous control group (F) may execute the transport command step (S60) at the same speed. At this time, the information shared with the succeeding gantry loader (10) may include control information acquired in the information acquisition step (S10) in addition to the transport speed information.

More specifically, the transport speed information shared by the preceding gantry loader 10 with the succeeding gantry loader 10 may be the maximum speed parameter (En) including the speed time constant of the preceding gantry loader 10 acquired in the information acquisition step (S10), which is a transport speed control information for a servomotor 12 which transports the gantry loader 10 on the guide beam 20.

Meanwhile, in the case of including the steps (S11, S110) regarding the synchronous control as described in the exemplary embodiment, when the gantry loader (10) has reached the transport target point and the current position (An) matches with the transport target position (Bn) in the target point arrival determination step (S80) which is executed after the safety distance maintenance step (S70), the synchronous control group (F) designated in the synchronous control step (S110) may be released before returning to the initial step, i.e., the information acquisition step (S10), and the synchronous control release step (S90) may be executed, so that the gantry loaders (10) already selected as the synchronous control group (F) are not synchronously controlled.

As explained through another exemplary embodiments, a plurality of gantry loaders 10 installed on the single guide beam 20 may share basic information such as a position, a movement path, a transport target point, and a transport speed, etc. with each other, thereby increasing an operating efficiency of the gantry loaders 10 and improving a processing productivity of the material being handled.

Meanwhile, in a structure in which a plurality of gantry loaders 10 is installed on a single guide beam 20, a control method for preventing collision or interference between the gantry loaders 10 with reference to FIG. 3 and a control method including synchronous control between the gantry loaders 10 with reference to FIG. 4 are inventions that have the same technical features to control the gantry loaders 10, which may be applied as a single combined control method, but may also be applied independently in some cases.

As described above, while the present disclosure has been explained with reference to preferred exemplary embodiments thereof, it will be understood by those skilled in the art that various modifications and changes may be made to the present disclosure without departing from the spirit and scope of the present disclosure as set forth in the claims below.

### [Explanation of Signs]

10: gantry loader
11: arm
12: servomotor
20: guide beam
30: control device
40: communication line
S10: information acquisition step
S11: synchronous control determination step
S110: synchronous control step
S111: synchronous control group designation step
S112: preceding and succeeding gantry loader selection step
S113: synchronization step
S20: movement path and priority calculation step
S30: transport command and transport determination step
S31: transport determination step
S32: transport command determination step
S40: movement path interference determination step
S41: current position interference determination step
S42: movement path interference determination step
S50: priority determination step
S60: transport command step
S70: safety distance maintenance step
S71: distance calculation step
S72: safety distance determination step
S73: normal speed maintenance step
S74: deceleration step
S80: target point arrival determination step
S90: synchronous control release step

## Claims

1. A method of controlling a plurality of gantry loaders that reciprocates on a single guide beam 20 installed in a horizontal direction by sharing control information among each gantry loader through a communication line 40, the method comprising:
an information acquisition step (S10) for acquiring control information of each gantry loader 10 from respective control devices 30 equipped in the plurality of gantry loaders 10;
a movement path and priority calculation step (S20) for calculating a predetermined work priority according to a movement path and a performed work (Dn) of each gantry loader 10 based on the control information acquired in the information acquisition step (S10);
a transport command and transport determination step (S30) including a transport determination step (S31) to determine whether the gantry loader 10 is currently transporting by confirming the command information, and a transport command determination step (S32) to determine whether the transport command has been updated for each gantry loader 10 when it is determined that the gantry loader 10 is not transporting in the transport determination step (S31), wherein when the transport command is input to each gantry loader 10 in the transport command determination step (S32), the movement path and priority calculation step (S20) is executed again;
a movement path interference determination step (S40) including a current position interference determination step (S41) to determine whether the movement path calculated in the movement path and priority calculation step (S20) interferes with a current position (An) of the adjacent gantry loader (10) when the transfer command has not been updated for each gantry loader 10 in the transport command and transport determination step (S30), and a movement path interference determination step (S42) to determine whether the movement path calculated in the movement path and priority calculation step (S20) interferes with the movement path of the adjacent gantry loader 10 when it is determined that the movement path of the gantry loader 10 does not interfere with the current position (An) of the adjacent gantry loader 10 in the current position interference determination step (S41) or when it is determined that the gantry loader 10 is being transported in the transfer determination step (S31);
a priority determination step (S50) in which when the movement path of the gantry loader 10 interferes with the current position (An) or the movement path of the adjacent gantry loader 10 in the current position interference determination step (S41), a work priority value of a current gantry loader 10 is compared with a work priority value of the adjacent gantry loader 10, and then a standby command is executed so that a current gantry loader 10 may not depart and wait at the current position when the work priority value is smaller than the work priority value of the adjacent gantry loader 10;
a transport command step (S60) in which when the movement path of the gantry loader 10 does not interfere with the current position (An) or the movement path of the adjacent gantry loader 10 in the current position interference determination step (S41), or when the work priority value determined in the priority determination step (S50) is greater than the work priority value of the adjacent gantry loader 10, a transport command is given to move the gantry loader to a transport target position (Bn) acquired in the information acquisition step (S10);
a safety distance maintenance step (S70) in which when the gantry loader 10 is determined to be transporting in the transport determination step (S31) or the transport command is given in the transport command step (S60), a distance calculation step (S71) is executed to calculate a distance to the adjacent gantry loader 10 by calculating a difference value between the current position (An) of the gantry loader 10 being transported and the current position (An) of the adjacent gantry loader 10, a safety distance determination step (S72) is executed to determine whether the distance to the adjacent gantry loader 10 satisfies a predetermined safety distance range as a result of the distance calculation step (S71), a normal speed maintenance step (S73) is executed to command a transport speed of the gantry loader 10 to be accelerated to a predetermined maximum speed when the distance from the adjacent gantry loader 10 satisfies the predetermined safety distance range as a result of the safety distance determination step (S72) , and a deceleration step (S74) is executed to command a transport speed of the gantry loader 10 to be decelerated according to a pre-determined deceleration ratio when the distance from the adjacent gantry loader 10 does not satisfy a pre-determined safety distance range; and
a target point arrival determination step (S80) in which it is determined whether each gantry loader has reached a transport target point as it moves after the safety distance maintenance step (S70), and a process returns to the information acquisition step (S10) when each gantry loader 10 has reached the transport target point, but the safety distance maintenance step (S70) is repeated when each gantry loader 10 has not reached the transport target point.

2. The method of claim 1, wherein the control information acquired in the information acquisition step (S10) includes a current position (An) of the gantry loader 10 on the guide beam 20, the transport target position (Bn), a transport speed (Cn) including a real-time transport speed change value, a maximum speed parameter (En) including a speed time constant, a performance task information (Dn) of the gantry loader 10, and synchronous control command information (Fn).

3. The method of claim 1, wherein the transport determination step (S31) makes a decision by checking the transport speed (Cn) of the gantry loader 10 among the control information.

4. The method of claim 1, wherein in the movement path and priority calculation step (S20), the movement path of each gantry loader 10 is determined by calculating coordinate values of a section that linearly connects coordinate values of the current position (An) and the transport target position (Bn), while including a movement direction of the gantry loader 10.

5. The method of claim 1, wherein in the movement path and priority calculation step (S20), the work priority of each gantry loader 10 is set in advance for each type of the performance task information (Dn), and the work priority value of the performance task information (Dn) of each gantry loader 10 is calculated by comparing the performance task information (Dn) of each gantry loader 10 with a preset work priority value.

6. The method of claim 1, wherein the current position interference determination step (S41) determines that interference occurs when the current position (An) of an adjacent gantry loader 10 falls within a range of the coordinate values between a starting point and an arrival point of the movement path of the current gantry loader 10 which are calculated in the movement path and priority calculation step (S20).

7. The method of claim 1, wherein the movement path interference determination step (S42) determines whether there is an overlapping portion between a range of coordinate values between the start point and the arrival point of the movement path of the current gantry loader 10 and a range of coordinate values between the start point and the arrival point of the movement path of an adjacent gantry loader 10 which are calculated in the movement path and priority calculation step (S20).

8. The method of claim 1, wherein in the priority determination step (S50), the transport standby command is configured to return a process to the movement path interference determination step (S40) in real time and re-execute the movement path interference determination step (S40) according to control information changed by the transport of the adjacent gantry loader 10.

9. The method of claim 1, wherein in the transport command step (S60), the transport speed command value of the gantry loader 10 moving to the transport target position (Bn) is a maximum speed parameter (En) value including the speed time constant.

10. The method of claim 1, wherein the safety distance determined in advance in the safety distance determination step (S72) is a sum of the non-contact distance (α) between mechanical parts that can exclude contact between mechanical parts of the adjacent gantry loader 10 and a braking distance (β) when the current gantry loader 10 stops at the maximum speed.

11. The method of claim 1, wherein a maximum speed determined in advance in the normal speed maintenance step (S73) is a maximum speed parameter (En) value including the speed time constant acquired in the information acquisition step (S10).

12. The method of claim 1, wherein the deceleration ratio determined in advance in the deceleration step (S74) is differentially set according to a difference between the distance from the current gantry loader 10 to the adjacent gantry loader 10 and the safety distance determined in the safety distance determination step (S72).

13. The method of claim 12, wherein the deceleration ratio is set in such a way that a distance obtained by subtracting the predetermined mechanical non-contact distance (α) from the current position (An) between the current gantry loader 10 and the adjacent gantry loader 10 is compared with a predetermined braking distance (β), and a deceleration degree increases as the distance obtained by subtracting the predetermined mechanical non-contact distance (α) from the current position (An) becomes smaller than the braking distance (β).

14. The method of claim 1, wherein in the target point arrival determination step (S80), whether each of the gantry loaders 10 reaches the transport target point is determined by confirming that the current position (An) of each of the gantry loaders 10 matches the transport target position (Bn).

15. The method of claim 1, wherein a synchronous control determination step (S11) is included after the information acquisition step (S10) in which it is determined whether synchronous control command information (Fn) has been input in the information acquisition step (S10), and when it is determined that synchronous control command information (Fn) has not been input, the movement path and priority calculation step (S20) is executed, but when it is determined that synchronous control command information (Fn) has been input, a synchronous control step (S110) is executed,
wherein the synchronous control step (S110) sequentially comprises:
a synchronous control group designation step (S111) in which when it is determined that the synchronous control command information (Fn) has been input in the synchronous control determination step (S11), it is determined whether the synchronous control command information (Fn) has been sequentially input for adjacent gantry loaders 10 and designates the gantry loaders 10 into which the synchronous control command information (Fn) has been sequentially input as a synchronous control group (F);
a preceding and succeeding gantry loader selection step (S112) wherein a preceding and succeeding gantry loader is identified and selected according to a movement direction of the gantry loader 10 in the synchronous control group (F) being designated in synchronous control group designation step (S111); and
a synchronization step (S113) wherein the transport speed information of the preceding gantry loader 10 selected in the synchronous control group selection step (S112) is shared with the succeeding gantry loader 10 in the synchronous control group (F) and the transport command step (S60) is executed.

16. The method of claim 15, wherein the synchronous control group designation step (S111) determines whether the synchronous control command information (Fn) has been input to left and right gantry loaders 10 based on the current gantry loader 10, and when the synchronous control command information (Fn) has been input to the left and right gantry loaders 10, it is determined whether the synchronous control command information (Fn) has also been sequentially input to the left gantry loader 10 or the right gantry loaders 10 and designates the gantry loaders 10 to which the synchronous control command information (Fn) has been sequentially input as the synchronous control group (F

17. The method of claim 15, wherein the preceding and succeeding gantry loader selection step (S112) identifies the movement direction of the gantry loader 10 by comparing the current position (An) and the transfer target position (Bn) value of each gantry loader 10 selected as the synchronous control group (F), and designates the preceding gantry loader 10 and succeeding gantry loader 10 in the order in which the current position (An) is located at a forefront of the movement direction of the gantry loader 10 for the gantry loaders 10 having the same movement direction.

18. The method of claim 15, wherein in the synchronization step (S113), the transport speed information shared by the preceding gantry loader 10 with the succeeding gantry loader 10 is the maximum speed parameter (En) including the speed time constant of the preceding gantry loader 10 acquired in the information acquisition step (S10).

19. A method of controlling a plurality of gantry loaders that reciprocates on a single guide beam 20 installed in a horizontal direction by sharing control information among each gantry loader through a communication line 40, the method comprising:
an information acquisition step (S10) for acquiring control information of each gantry loader 10 from respective control devices 30 equipped in the plurality of gantry loaders 10;
a synchronous control determination step (S11) for determining whether the synchronous control command information (Fn) has been input in the synchronous control determination step (S11);
a synchronous control step (S110) sequentially comprises:
a synchronous control group designation step (S111) in which when it is determined that the synchronous control command information (Fn) has been input in the synchronous control determination step (S11), it is determined whether the synchronous control command information (Fn) has been sequentially input for adjacent gantry loaders 10 and designates the gantry loaders 10 into which the synchronous control command information (Fn) has been sequentially input as a synchronous control group (F);
a preceding and succeeding gantry loader selection step (S112) wherein a preceding and succeeding gantry loader is identified and selected according to a movement direction of the gantry loader 10 in the synchronous control group (F) being designated in synchronous control group designation step (S111); and
a synchronization step (S113) wherein the transport speed information of the preceding gantry loader 10 selected in the synchronous control group selection step (S112) is shared with the succeeding gantry loader 10 in the synchronous control group (F) and the transport command step (S60) is executed;
a transport command step (S60), after the synchronous control step (S110), for commanding a transport command to move the gantry loader 10 to a transport target position (Bn) acquired in the information acquisition step (S10);
a safety distance maintenance step (S70) in which when the gantry loader 10 is determined to be transporting in the transport determination step (S31) or the transport command is given in the transport command step (S60), a distance calculation step (S71) is executed to calculate a distance to the adjacent gantry loader 10 by calculating a difference value between the current position (An) of the gantry loader 10 being transported and the current position (An) of the adjacent gantry loader 10, a safety distance determination step (S72) is executed to determine whether the distance to the adjacent gantry loader 10 satisfies a predetermined safety distance range as a result of the distance calculation step (S71), a normal speed maintenance step (S73) is executed to command a transport speed of the gantry loader 10 to be accelerated to a predetermined maximum speed when the distance from the adjacent gantry loader 10 satisfies the predetermined safety distance range as a result of the safety distance determination step (S72) , and a deceleration step (S74) is executed to command a transport speed of the gantry loader 10 to be decelerated according to a pre-determined deceleration ratio when the distance from the adjacent gantry loader 10 does not satisfy a pre-determined safety distance range;
a target point arrival determination step (S80) in which it is determined whether each gantry loader has reached a transport target point as it moves after the safety distance maintenance step (S70), and a process returns to the information acquisition step (S10) when each gantry loader 10 has reached the transport target point, but the safety distance maintenance step (S70) is repeated when each gantry loader 10 has not reached the transport target point; and
a synchronous control release step (S90) wherein when it is determined that the gantry loader 10 has reached the transport target point in the target point arrival determination step (S80), the synchronous control group (F) is released.

20. The method of claim 19, wherein the synchronous control group designation step (S111) determines whether the synchronous control command information (Fn) has been input to left and right gantry loaders 10 based on the current gantry loader 10, and when the synchronous control command information (Fn) has been input to the left and right gantry loaders 10, it is determined whether the synchronous control command information (Fn) has also been sequentially input to the left gantry loader 10 or the right gantry loaders 10 and designates the gantry loaders 10 to which the synchronous control command information (Fn) has been sequentially input as the synchronous control group (F).

21. The method of claim 19, wherein the preceding and succeeding gantry loader selection step (S112) identifies the movement direction of the gantry loader 10 by comparing the current position (An) and the transfer target position (Bn) value of each gantry loader 10 selected as the synchronous control group (F), and designates the preceding gantry loader 10 and succeeding gantry loader 10 in the order in which the current position (An) is located at a forefront of the movement direction of the gantry loader 10 for the gantry loaders 10 having the same movement direction.

22. The method of claim 15, wherein in the synchronization step (S113), the transport speed information shared by the preceding gantry loader 10 with the succeeding gantry loader 10 is the maximum speed parameter (En) including the speed time constant of the preceding gantry loader 10 acquired in the information acquisition step (S10).

23. The method of claim 15, wherein the control information acquired in the information acquisition step (S10) includes a current position (An) of the gantry loader 10 on the guide beam 20, the transport target position (Bn), a transport speed (Cn) including a real-time transport speed change value, a maximum speed parameter (En) including a speed time constant, a performance task information (Dn) of the gantry loader 10, and synchronous control command information (Fn).

24. The method of claim 19, wherein in the transport command step (S60), the transport speed command value of the gantry loader 10 moving to the transport target position (Bn) is a maximum speed parameter (En) value including the speed time constant.

25. The method of claim 19, wherein the safety distance determined in advance in the safety distance determination step (S72) is a sum of the non-contact distance (α) between mechanical parts that can exclude contact between mechanical parts of the adjacent gantry loader 10 and a braking distance (β) when the current gantry loader 10 stops at the maximum speed.

26. The method of claim 19, wherein a maximum speed determined in advance in the normal speed maintenance step (S73) is a maximum speed parameter (En) value including the speed time constant acquired in the information acquisition step (S10).

27. The method of claim 19, wherein the deceleration ratio determined in advance in the deceleration step (S74) is differentially set according to a difference between the distance from the current gantry loader 10 to the adjacent gantry loader 10 and the safety distance determined in the safety distance determination step (S72).

28. The method of claim 27, wherein the deceleration ratio is set in such a way that a distance obtained by subtracting the predetermined mechanical non-contact distance (α) from the current position (An) between the current gantry loader 10 and the adjacent gantry loader 10 is compared with a predetermined braking distance (β), and a deceleration degree increases as the distance obtained by subtracting the predetermined mechanical non-contact distance (α) from the current position (An) becomes smaller than the braking distance (β).

29. The method of claim 19, wherein in the target point arrival determination step (S80), whether each of the gantry loaders 10 has reached the transport target point is determined by identifying that the current position (An) of each of the gantry loaders 10 matches the transport target position (Bn).
